# EUROPEAN PATENT APPLICATION

(11) **EP 4 317 203 A1**
(43) Date of publication of application: **07.02.2024**
(21) Application number: 22780261.8
(22) Date of filing: 18.03.2022
(51) Int. Cl.: C08F 8/00, C08L 29/14, H01M 4/139, H01M 4/62

(54) **RESIN COMPOSITION FOR SECONDARY BATTERY ELECTRODE**

(30) Priority: 31.03.2021 JP 2021061852
(71) Applicant: SEKISUI CHEMICAL CO., LTD., 530-0047 (JP)
(72) Inventor: SASAKI, Jun, Koka-shi, Shiga 528-8585 (JP); ASABA, Yutaro, Koka-shi, Shiga 528-8585 (JP); TAKENAKA, Keisuke, Koka-shi, Shiga 528-8585 (JP); SAKAMOTO, Ryou, Shunan-shi, Yamaguchi 746-0006 (JP)
(74) Representative: Cabinet Beau de Loménie
(86) International application number: PCT/JP2022/012777
(87) International publication number: WO 2022/210046

(57) **Abstract**

The present invention provides a resin composition for a secondary battery electrode that is excellent in the dispersibility of active materials, resistance against electrolyte solutions, and coating film density and capable of achieving both high conductivity and adhesion. Provided is a resin composition for a secondary battery electrode, the resin composition containing: an active material; a non-aqueous solvent; and a polyvinyl acetal resin, the polyvinyl acetal resin including a structural unit containing a halogen atom, and having a Vicat softening temperature of 50°C or higher and 150°C or lower.

## Description

### TECHNICAL FIELD

The present invention relates to a resin composition for a secondary battery electrode that is excellent in the dispersibility of active materials, resistance against electrolyte solutions, and coating film density and capable of achieving both high conductivity and adhesion.

### BACKGROUND ART

Polyvinyl acetal resins are synthesized from polyvinyl alcohol as a raw material. They have an acetyl group, a hydroxy group, and an acetal group in the side chains. These side chains allow polyvinyl acetal resins to exhibit properties such as excellent toughness or excellent adhesion. The resin physical properties can be changed by changing the proportions of the side chain groups. Owing to such characteristics, polyvinyl acetal resins are used in many applications such as electrodes of storage batteries, pigment compositions, and ceramic green sheets.

For example, Patent Literature 1 discloses one of such polyvinyl acetal resins. Patent Literature 1 discloses use of a polyvinyl acetal resin containing an aromatic acetal group in a composition for a lithium secondary battery electrode.

### CITATION LIST

### - Patent Literature

Patent Literature 1: JP 2015-141883 A

### SUMMARY OF INVENTION

### - Technical problem

However, using the polyvinyl acetal resin disclosed in Patent Literature 1 as an electrode material for a secondary battery may decrease the dispersibility of active materials, the resistance against electrolyte solutions, and the coating film density.

Moreover, with the polyvinyl acetal resin, achieving both the conductivity and the adhesion may not be possible. Increasing the conductivity may result in a rigid structure and decrease the adhesion, while increasing the adhesion may prevent the formation of electron conduction paths and decrease battery performance. Thus, there is a need for a resin excellent in dispersing properties for active materials, resistance against electrolyte solutions, and coating film density and exhibiting excellent adhesion while maintaining high conductivity.

The present invention aims to provide a resin composition for a secondary battery electrode that is excellent in the dispersibility of active materials, resistance against electrolyte solutions, and coating film density and capable of achieving both high conductivity and adhesion.

### - Solution to problem

The present invention relates to a resin composition for a secondary battery electrode, the resin composition containing: an active material; a non-aqueous solvent; and a polyvinyl acetal resin, the polyvinyl acetal resin including a structural unit containing a halogen atom, and having a Vicat softening temperature of 50°C or higher and 150°C or lower.

The present invention is described in detail below.

As a result of extensive studies, the present inventors have found out that the combined use of an active material, a non-aqueous solvent, and a polyvinyl acetal resin having a specific structure and specific physical properties results in excellent dispersibility of active materials, excellent resistance against electrolyte solutions, and excellent coating film density while enabling both high conductivity and adhesion to be achieved. The inventors also have found out that a secondary battery obtained using such a resin composition for a secondary battery electrode can achieve high capacity retention, and completed the present invention.

The resin composition for a secondary battery electrode of the present invention contains an active material.

Examples of the active material include a positive electrode active material and a negative electrode active material.

Examples of the positive electrode active material include lithium-containing composite metal oxides such as lithium nickel oxides, lithium cobalt oxides, and lithium manganese oxides. Specific examples include LiNiO₂, LiCoO₂, and LiMn₂O₄.

The negative electrode active material may be, for example, a material conventionally used as a negative electrode active material for a storage battery. Examples include spherical natural graphite, natural graphite, artificial graphite, amorphous carbon, carbon black, and materials obtained by adding a different element to any of these components.

Each of these may be used alone, or two or more thereof may be used in combination.

The resin composition for a secondary battery electrode of the present invention preferably further contains a conductive aid (conductivity-imparting agent). When containing a conductive aid, the resulting composition for a storage battery electrode can have lower electric resistance. Examples of the conductive aid include carbon materials such as graphite, acetylene black, carbon black, ketjen black, and vapor-grown carbon fibers.

In the resin composition for a secondary battery electrode of the present invention, the amount of the active material is preferably 20% by weight or more, more preferably 25% by weight or more, still more preferably 30% by weight or more, and is preferably 80% by weight or less, more preferably 70% by weight or less.

The resin composition for a secondary battery electrode of the present invention contains a non-aqueous solvent.

The non-aqueous solvent means a solvent having a water content of 100 ppm by mass or less.

Examples of the non-aqueous solvent include organic solvents such as ketones, alcohols, aromatic hydrocarbons, esters, and amides.

Examples of the ketones include acetone, methyl ethyl ketone, dipropyl ketone, and diisobutyl ketone.

Examples of the alcohols include methanol, ethanol, isopropanol, and butanol.

Examples of the aromatic hydrocarbons include toluene and xylene.

Examples of the esters include methyl propionate, ethyl propionate, butyl propionate, methyl butanoate, ethyl butanoate, butyl butanoate, methyl pentanoate, ethyl pentanoate, butyl pentanoate, methyl hexanoate, ethyl hexanoate, butyl hexanoate, 2-ethylhexyl acetate, and 2-ethylhexyl butyrate.

Also usable are methyl cellosolve, ethyl cellosolve, butyl cellosolve, terpineol, dihydroterpineol, butyl cellosolve acetate, butyl carbitol acetate, terpineol acetate, and dihydroterpineol acetate.

Examples of the carbonates include propylene carbonate, ethylene carbonate, diethyl carbonate, dimethyl carbonate, and methyl ethyl carbonate.

Examples of the amides include dimethylacetamide, N,N-dimethylformamide, 1-methyl-2-pyrrolidone (N-methylpyrrolidone), and diethylformamide.

Preferred among these are amides, and particularly preferred are compounds having a lactam structure. Preferred among the compounds having a lactam structure are compounds having a 3- to 6-membered ring lactam structure, and particularly preferred are compounds having a 5-membered ring lactam structure.

In the resin composition for a secondary battery electrode of the present invention, the amount of the non-aqueous solvent is preferably 5% by weight or more, more preferably 10% by weight or more, and is preferably 45% by weight or less, more preferably 40% by weight or less.

The resin composition for a secondary battery electrode of the present invention contains a polyvinyl acetal resin.

The polyvinyl acetal resin includes a structural unit containing a halogen atom and has a Vicat softening temperature of 50°C or higher and 150°C or lower.

With the polyvinyl acetal resin contained, the dispersibility of the active material can be sufficiently improved, and both high conductivity and the dispersibility of the active material can be achieved.

The polyvinyl acetal resin has a Vicat softening temperature of 50°C or higher and 150°C or lower. With the Vicat softening temperature being within the range, excellent resistance against electrolyte solutions and high conductivity can be achieved. Moreover, changes in the coating film density are reduced, enabling formation of a dense electrode sheet. The lower limit of the Vicat softening temperature is preferably 60°C, more preferably 70°C, and the upper limit thereof is preferably 100°C, more preferably 90°C.

The Vicat softening temperature can be measured by a method in conformity with JIS K 7206:2016 (Plastics-Thermoplastic materials-Determination of Vicat softening temperature (VST), A50 method).

The Vicat softening temperature can be adjusted by applying the structure of the polyvinyl acetal resin (particularly the structure of the structural unit containing a halogen atom), the numerical ranges for the polyvinyl acetal resin described below (e.g., numerical ranges related to the structural unit containing a halogen atom, the hydroxy group content, the acetyl group content, and the degree of polymerization), and the method for producing the polyvinyl acetal resin.

The polyvinyl acetal resin includes a structural unit containing a halogen atom. With the structural unit containing a halogen atom, excellent adhesion and excellent dispersing properties can be achieved. Using such a resin composition in an electrode can reduce the electrode resistance, prevent degradation due to an electrolyte solution, and enables production of a high-output storage battery.

The terms used herein are explained below.

The term "halogen-modified unit content" means the amount of a structural unit containing a halogen atom.

The term "halogen-modified acetal-bond unit content" means the amount of a structure having a halogen atom bonded via an acetal bond (halogen-modified acetal-bond unit) .

The term "non-halogenated acetal group content" means the amount of an acetal group-containing structural unit excluding the halogen-modified acetal-bond unit.

The term "acetal group content" means the amount of an acetal group-containing structural unit. That is, the acetal group content includes the amount of the halogen-modified acetal-bond unit.

The halogen atom is preferably at least one selected from the group consisting of a fluorine atom, a chlorine atom, and a bromine atom. In particular, a chlorine atom is more preferably used.

The structural unit containing a halogen atom preferably contains one to three halogen atoms.

In the present invention, the structural unit containing a halogen atom may be any structure containing a halogen atom. The structural unit containing a halogen atom is preferably a structure having a halogen atom bonded via an acetal bond or a structure having a halogen atom or a halogen atom-containing group in a side chain, for example. The structure having a halogen atom bonded via an acetal bond encompasses a structure having a halogen atom bonded via an acetal bond and further via a linking group other than the acetal bond.

In the present invention, when the halogen atom is a fluorine atom, a combination of a fluorine atom with an aromatic hydrocarbon is preferred. When the halogen atom is a chlorine atom, a combination of a chlorine atom with an aliphatic hydrocarbon is preferred.

When the structural unit containing a halogen atom is a structure having a halogen atom bonded via an acetal bond (hereinafter, such a structural unit may also be referred to as a halogen-modified acetal-bond unit), the structural unit containing a halogen atom is preferably a structural unit represented by the formula (1). In the present invention, the polyvinyl acetal resin may have a structure in which the polyvinyl acetal resin has multiple types of halogen atoms in a single structural unit, or a structure in which the polyvinyl acetal resin includes multiple structural units containing different types of halogen atoms.

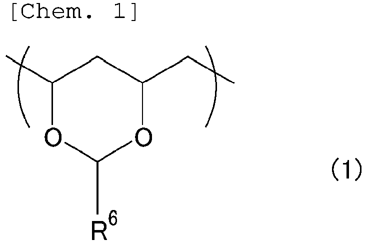

In the formula (1), R⁶ represents a halogen atom-containing hydrocarbon group.

The halogen-modified acetal-bond unit is also preferably a structural unit represented by the formula (2).

The presence of a structural unit represented by the formula (2) allows the main chain of the polyvinyl acetal resin to maintain an appropriate distance from halogen atoms. As a result, the polyvinyl acetal resin can have excellent adhesion and dispersing properties. In addition, the polyvinyl acetal resin can reduce electrode resistance when used for an electrode of a storage battery.

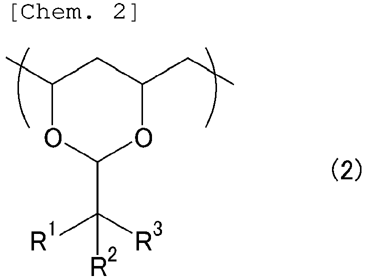

In the formula (2), R¹ represents a halogen atom or a halogenated alkyl group; and R² and R³ each independently represent a hydrogen atom or a halogen atom.

R² and R³ each may be a halogenated alkyl group.

Examples of the halogenated alkyl group include chloroalkyl groups, fluoroalkyl groups, and bromoalkyl groups.

Examples of the chloroalkyl groups include a chloromethyl group (-CH₂Cl), a chloroethyl group (-CH₂CH₂Cl), a dichloroethyl group, a chloropropyl group, and a trichloromethyl group. In the formula (1), R¹ is preferably a chlorine atom, -CH₂Cl, or -CH₂CH₂Cl.

Examples of the fluoroalkyl groups include a fluoromethyl group (-CH₂F), a fluoroethyl group (-CH₂CH₂F), a difluoroethyl group, a fluoropropyl group, and a trifluoromethyl group.

Examples of the bromoalkyl groups include a bromomethyl group (-CH₂Br), a bromoethyl group (-CH₂CH₂Br), a dibromoethyl group, a bromopropyl group, and a tribromomethyl group.

In the present invention, a preferred combination is one in which R¹ is a halogen atom and R² and R³ are hydrogen atoms.

R⁶ may be a halogen atom-containing aromatic group. The halogen atom in the halogen atom-containing aromatic group may be a chlorine atom, a fluorine atom, or a bromine atom.

Examples of the halogen atom-containing aromatic group include chlorophenyl groups, chloroalkyl phenyl groups, fluorophenyl groups, fluoroalkyl phenyl groups, bromophenyl groups, and bromoalkyl phenyl groups.

Examples of the chlorophenyl groups include a 2-chlorophenyl group, a 3-chlorophenyl group, a 4-chlorophenyl group, a 2,4-dichlorophenyl group, and a 3,4-dichlorophenyl group.

Examples of the chloroalkyl phenyl groups include a 2-chloromethyl phenyl group, a 3-chloromethyl phenyl group, and a 4-chloromethyl phenyl group.

The chlorophenyl groups and the chloroalkyl phenyl groups may have other substituents(s) in addition to the chloro groups.

Examples of the fluorophenyl groups include a 2-fluorophenyl group, a 3-fluorophenyl group, a 4-fluorophenyl group, a 2,4,6-trifluorophenyl group, and a perfluorophenyl group.

Examples of the fluoroalkylphenyl groups include a 4-trifluoromethylphenyl group, a 3-trifluoromethylphenyl group, a 3,5-ditrifluoromethylphenyl group, a 4-pentafluoroethylphenyl group, and a 4-perfluorohexylphenyl group.

Examples of the bromophenyl groups include a 2-bromophenyl group and a 3-bromophenyl group.

When the structural unit containing a halogen atom is a structure having a halogen atom or a halogen atom-containing group in a side chain (hereinafter, such a structural unit may also be referred to as a halogen-modified side-chain-bond unit), the structural unit containing a halogen atom is preferably a structural unit represented by the following formula (3).

The presence of the structural unit represented by the formula (3) allows the modified polyvinyl acetal resin to have excellent adhesion and dispersing properties and allows the resulting composition to have even better stability over time. It also can reduce the electrode resistance when the polyvinyl acetal resin is used for an electrode of a storage battery.

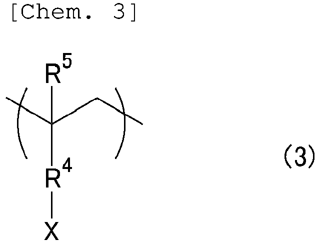

In the formula (3), R⁴ represents a single bond or an alkylene group; R⁵ represents a hydrogen atom, a halogen atom, or a halogenated alkyl group; and X represents at least one selected from the group consisting of a fluorine atom, a chlorine atom, and a bromine atom.

R⁴ may be a halogenated alkylene group.

The alkylene group represented by R⁴ preferably has a carbon number of 1 to 20, and is preferably a linear, branched, or cyclic alkylene group, for example.

Examples of the linear alkylene group include methylene, ethylene, trimethylene, tetramethylene, pentamethylene, hexamethylene, octamethylene, and decamethylene groups.

Examples of the branched alkylene group include methyl methylene, methyl ethylene, 1-methyl pentylene, and 1,4-dimethyl butylene groups.

Examples of the cyclic alkylene group include cyclopropylene, cyclobutylene, and cyclohexylene groups. Preferred among these are linear alkyl groups such as methylene, ethylene, n-propylene, and n-butylene groups. More preferred are methylene and ethylene groups.

Examples of the chloroalkyl group represented by R⁵ include those mentioned for R¹.

In the present invention, a preferred combination is one in which R⁴ is a single bond and R⁵ is a hydrogen atom.

The lower limit of the amount of the structural unit containing a halogen atom (halogen-modified unit content) relative to all structural units of the polyvinyl acetal resin is preferably 0.01 mol%, and the upper limit thereof is preferably 20 mol%. When the halogen-modified unit content is 0.01 mol% or greater, the adhesion and the dispersing properties can be improved. The lower limit of the halogen-modified unit content is more preferably 0.05 mol%, still more preferably 0.1 mol%, and the upper limit thereof is more preferably 15 mol%, still more preferably 10 mol%.

Here, when the polyvinyl acetal resin includes both the halogen-modified acetal-bond unit and the halogen-modified side-chain bond unit, the halogen-modified unit content means the total amount of these units.

When the polyvinyl acetal resin includes two types of structural units containing a halogen atom, the ratio between the amounts of these two halogen-modified units is preferably within the range of 100:1 to 1:100.

When the polyvinyl acetal resin includes a structure having a halogen atom bonded via an acetal bond (halogen-modified acetal-bond unit), the lower limit of the amount of the halogen-modified acetal-bond unit (halogen-modified acetal-bond unit content) is preferably 0.01 mol%, and the upper limit thereof is preferably 20 mol%. When the halogen-modified acetal-bond unit content is 0.01 mol% or greater, the adhesion and the dispersing properties can be improved. The lower limit of the halogen-modified unit content is more preferably 0.05 mol%, still more preferably 0.1 mol%, and the upper limit thereof is more preferably 15 mol%, still more preferably 10 mol%.

When the polyvinyl acetal resin includes a structure having a halogen atom or a halogen atom-containing group in a side chain (halogen-modified side-chain-bond unit), the lower limit of the amount of the halogen-modified side-chain-bond unit is more preferably 0.1 mol%, and the upper limit thereof is more preferably 15 mol%. The lower limit is still more preferably 0.5 mol%, and the upper limit is still more preferably 10 mol%. When the amount of the halogen-modified side-chain-bond unit is within the above range, the adhesion and the dispersing properties can be improved.

When the polyvinyl acetal resin of the present invention includes both the halogen-modified acetal-bond unit and the halogen-modified side-chain-bond unit, the ratio between these units (halogen-modified acetal-bond unit/halogen-modified side-chain-bond unit) is preferably 0.1 or greater and 3 or less, more preferably 0.5 or greater and 2 or less.

The polyvinyl acetal resin preferably includes an acetal group-containing structural unit represented by the following formula (4-1), a hydroxy group-containing structural unit represented by the following formula (4-2), and an acetyl group-containing structural unit represented by the following formula (4-3).

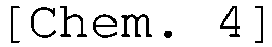

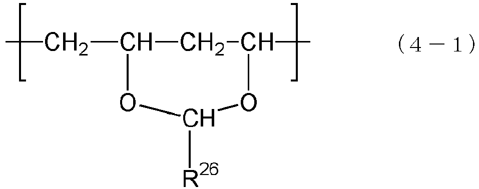

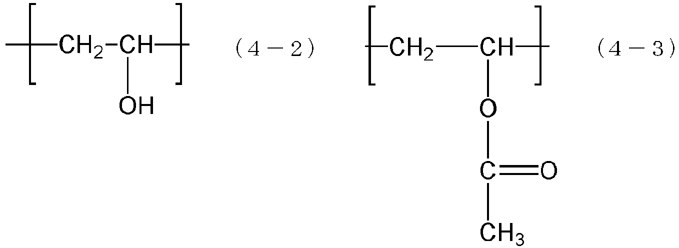

In the formula (4-1), R²⁶ represents a hydrogen atom or a C1-C20 alkyl group.

When R²⁶ in the formula (4-1) is a C1-C20 alkyl group, examples of the alkyl group include methyl, ethyl, n-propyl, isopropyl, n-butyl, iso-butyl, sec-butyl, tert-butyl, pentyl, hexyl, heptyl, 2-ethylhexyl, octyl, nonyl, decyl, undecyl, dodecyl, tridecyl, tetradecyl, pentadecyl, and octadecyl groups. Preferred among these are methyl and n-propyl groups.

In the polyvinyl acetal resin, the amount of the acetal group-containing structural unit represented by the formula (4-1) (hereinafter also referred to as a "non-halogenated acetal group content") is preferably 5.0 mol% or greater and 70.0 mol% or less.

When the non-halogenated acetal group content is within the range, the dispersing properties for the active material can be more improved.

The non-halogenated acetal group content is more preferably 10.0 mol% or greater and 60.0 mol% or less.

The acetal group content herein is calculated by counting acetalized two hydroxy groups because a non-halogenated acetal group of a polyvinyl acetal resin is obtained by acetalizing two hydroxy groups.

The non-halogenated acetal group content can be measured by NMR, for example.

The amount of "the structure having a halogen atom bonded via an acetal bond" described above is not included in the non-halogenated acetal group content.

The amount of the acetoacetal group acetalized with acetaldehyde (acetoacetal group content) in the polyvinyl acetal resin is preferably 10 mol% or more and 30 mol% or less.

The amount of the butyl acetal group acetalized with butyraldehyde (butyral group content) in the polyvinyl acetal resin is preferably 10 mol% or more and 60 mol% or less. When the amounts are within the ranges, the polyvinyl acetal resin can maintain water resistance and can have excellent viscosity characteristics.

When the polyvinyl acetal resin includes both the structural unit containing a non-halogenated acetal group and the halogen-modified acetal-bond unit, the acetal group content, which is the sum of the non-halogenated acetal group content and the halogen-modified acetal-bond unit content [non-halogenated acetal group content + halogen-modified acetal-bond unit content], is preferably 10 mol% or more and 70 mol% or less. The sum within the range allows the polyvinyl acetal resin to maintain solubility in an organic solvent while having excellent adhesion and excellent dispersing properties. The acetal group content is more preferably 15 mol% or more and 60 mol% or less.

The ratio of the amount of the structural unit containing a non-halogenated acetal group to the halogen modified acetal bond unit content [amount of structural unit containing non-halogenated acetal group/halogen-modified acetal-bond unit content] is preferably 6,000 or less. The ratio is more preferably 4,000 or less. The lower limit thereof is not limited, but is preferably 1 or greater.

The sum of the non-halogenated acetal group content and the halogen-modified unit content [non-halogenated acetal group content + halogen-modified unit content] in the polyvinyl acetal resin is preferably 10 mol% or greater and 70 mol% or less. When the sum is within the range, the adhesion and the dispersing properties can be improved. The non-halogenated acetal group content + halogen-modified unit content is more preferably 15 mol% or greater and 60 mol% or less.

The ratio of the non-halogenated acetal group content to the halogen-modified unit content [non-halogenated acetal group content/halogen-modified unit content] in the polyvinyl acetal resin is preferably 1 or greater and 6,000 or less. When the ratio is within the range, the adhesion and the dispersing properties can be improved.

The non-halogenated acetal group content/halogen-modified unit content is more preferably 2 or greater and 5,000 or less.

In the polyvinyl acetal resin, the amount of the hydroxy group-containing structural unit represented by the formula (4-2) (hereinafter also referred to as a "hydroxy group content") is preferably 20 mol% or greater and 90 mol% or less.

When the hydroxy group content is within the range, the dispersing properties for the active material can be sufficiently improved while high electron conductivity can be exhibited.

The hydroxy group content is more preferably 30.0 mol% or greater and 85.0 mol% or less.

The hydroxy group content can be measured by NMR, for example.

In the polyvinyl acetal resin, the amount of the acetyl group-containing structural unit represented by the formula (4-3) (hereinafter also referred to as an "acetyl group content") is preferably 0.1 mol% or greater, more preferably 5.0 mol% or greater, and is preferably 20.0 mol% or less, more preferably 15.0 mol% or less.

When the acetyl group content is within the range, an increase in viscosity is reduced, leading to higher application properties.

The acetyl group content can be measured by NMR, for example.

The polyvinyl acetal resin preferably has an average degree of polymerization of 100 or greater and 6,000 or less.

When the average degree of polymerization is within the range, the dispersing properties for the active material can be sufficiently improved while high electrical conductivity can be exhibited.

The average degree of polymerization is preferably 150 or greater and 5,500 or less, more preferably 200 or greater and 4,000 or less.

The average degree of polymerization can be measured in conformity with JIS K6726-1994.

The "average degree of polymerization of the polyvinyl acetal resin" herein means the average degree of polymerization of a polyvinyl alcohol resin as a raw material.

The amount of the polyvinyl acetal resin in the resin composition for a secondary battery electrode of the present invention is preferably 0.1% by weight or more, more preferably 0.5% by weight or more, and is preferably 20.0% by weight or less, more preferably 15.0% by weight or less.

In the resin composition for a secondary battery electrode of the present invention, the ratio of the amount of the polyvinyl acetal resin to the amount of the active material (amount of polyvinyl acetal resin/amount of active material) is preferably 0.01 or greater and 10.0 or less.

When the ratio is within the range, the active material can have good dispersibility and easily form conduction paths. This results in higher electrical conductivity.

The ratio of the amounts is more preferably 0.10 or greater and 8.00 or less.

Examples of the method for producing the polyvinyl acetal resin include: a method that includes providing a polyvinyl alcohol including a structural unit containing a halogen atom and then acetalizing the polyvinyl alcohol; and a method that includes acetalizing a polyvinyl alcohol not including a structural unit containing a halogen atom and then adding a halogen atom. Other examples include a method that includes providing a polyvinyl alcohol including a structural unit containing a halogen atom and a polyvinyl alcohol not including a structural unit containing a halogen atom and then introducing a structural unit containing a halogen atom by acetalization.

More specific examples include: a method that includes providing a polyvinyl alcohol already including a structural unit represented by the formula (3) and then acetalizing the polyvinyl alcohol; and a method that includes acetalizing a polyvinyl alcohol not including a structural unit represented by the formula (3) and then adding the portions corresponding to R⁴ and R⁵ of the structural unit represented by the formula (3). Other examples include a method that includes providing a polyvinyl alcohol already including a structural unit represented by the formula (3) and a polyvinyl alcohol not including a structural unit represented by the formula (3) and then introducing a structural unit represented by the formula (3) by acetalization.

Examples of the method for producing the polyvinyl alcohol including a structural unit containing a halogen atom include a method that includes copolymerizing vinyl chloride and vinyl acetate and then adding an acid or alkali to a solution of the obtained copolymer in alcohol for saponification. Alternatively, the polyvinyl alcohol including a structural unit containing a halogen atom may be produced by a method including adding a halogen atom.

Examples of the method including adding a halogen atom include a method that includes reacting a polyvinyl alcohol with a halogen gas.

The polyvinyl alcohol not including a structural unit containing a halogen atom (hereinafter also referred to simply as a polyvinyl alcohol) can be obtained by saponifying a copolymer of vinyl ester and ethylene, for example. Examples of the vinyl ester include vinyl formate, vinyl acetate, vinyl propionate, and vinyl pivalate. In particular, vinyl acetate is suitable from the economic viewpoint.

The introduction of a structural unit containing a halogen atom by acetalization may be performed using a method that includes reacting a polyvinyl alcohol with a halogen atom-containing aldehyde or aldehyde equivalent.

Among the halogen atom-containing aldehydes, examples of chlorine atom-containing aldehydes include chloroacetaldehyde, dichloroacetaldehyde, trichloroacetaldehyde, 3-chloropropionaldehyde, and 4-chlorobutyraldehyde.

Among the halogen atom-containing aldehydes, examples of fluorine atom-containing aldehydes include fluorine atom-containing aliphatic aldehydes and fluorine atom-containing aromatic aldehydes.

Examples of the fluorine atom-containing aliphatic aldehydes include fluoroacetaldehyde, difluoroacetaldehyde, trifluoroacetaldehyde, 2,2,3,3,3-pentafluoropropionaldehyde, 3-fluoropropionaldehyde, 3,3,3-trifluoropropionaldehyde, and 4-fluorobutyraldehyde.

Examples of the fluorine atom-containing aromatic aldehydes include fluorobenzaldehyde, fluoromethylbenzaldehyde, difluoromethylbenzaldehyde, trifluoromethylbenzaldehyde, and 3-(4-fluorophenyl)propionaldehyde.

Among the halogen atom-containing aldehydes, examples of bromine atom-containing aldehydes include bromine atom-containing aliphatic aldehydes and bromine atom-containing aromatic aldehydes.

Examples of the bromine atom-containing aliphatic aldehydes include acetyl bromide.

Examples of the bromine atom-containing aromatic aldehydes include 4-bromonicotinaldehyde, 2-bromoisophthalaldehyde, 1-bromo-2-naphthaldehyde, 4-bromo-2-thiophenecarboxaldehyde, 4-bromobenzaldehyde, 3-bromosalicylaldehyde, 4-bromo-1-naphthaldehyde, and 5-bromo-2-pyridinecarboxaldehyde.

The aldehyde equivalent is an aldehyde with a protective group or a compound that can be converted into an aldehyde by a conventional method. Examples thereof include acetal, hemiacetal, and aldehyde hydrate. Preferred among these are halogen atom-containing aldehyde equivalents.

Among the halogen atom-containing aldehyde equivalents, examples of chlorine atom-containing aldehyde equivalents include chloroacetaldehyde dimethyl acetal, chloroacetaldehyde diethyl acetal, 2-chloromethyl-1,3-dioxolane, dichloroacetaldehyde dimethyl acetal, dichloroacetaldehyde diethyl acetal, 2,2-dichloromethyl-1,3-dioxolane, trichloroacetaldehyde dimethyl acetal, trichloroacetaldehyde diethyl acetal, trichloroacetaldehyde methyl hemiacetal, trichloroacetaldehyde ethyl hemiacetal, chloral hydrate, 2,2,2-trichloromethyl-1,3-dioxolane, 3-chloropropionaldehyde dimethyl acetal, 3-chloropropionaldehyde diethyl acetal, 2-(2-chloroethyl)-1,3-dioxolane, 4-chlorobutyraldehyde dimethyl acetal, 4-chlorobutyraldehyde diethyl acetal, and 2-(3-chloropropyl)-1,3-dioxolane.

Among the halogen atom-containing aldehyde equivalents, examples of fluorine atom-containing aldehyde equivalents include difluoroacetaldehyde ethyl hemiacetal, 2-(perfluorohexyl)acetaldehyde dimethyl acetal, fluoroacetaldehyde dimethyl acetal, fluoroacetaldehyde diethyl acetal, 2-fluoromethyl-1,3-dioxolane, 2-(perfluorohexyl)acetaldehyde dimethyl acetal, difluoroacetaldehyde dimethyl acetal, difluoroacetaldehyde diethyl acetal, trifluoroacetaldehyde dimethyl acetal, trifluoroacetaldehyde diethyl acetal, trifluoroacetaldehyde methyl hemiacetal, trifluoroacetaldehyde ethyl hemiacetal, 2,2,2-trifluoromethyl-1,3-dioxolane, 3-fluoropropionaldehyde dimethyl acetal, 3-fluoropropionaldehyde diethyl acetal, 2-(2-fluoroethyl)-1,3-dioxolane, 4-fluorobutyraldehyde dimethyl acetal, 4-fluorobutyraldehyde diethyl acetal, and 2-(3-fluoropropyl)-1,3-dioxolane.

Among the halogen atom-containing aldehyde equivalents, examples of bromine atom-containing aldehyde equivalents include bromoacetaldehyde diethyl acetal, 3-bromobenzaldehyde diethyl acetal, and 4-bromobenzaldehyde diethyl acetal.

In the polyvinyl acetal resin, an ethylenically unsaturated monomer may be copolymerized as long as the effects of the present invention are not impaired. Any ethylenically unsaturated monomer may be used. Examples thereof include acrylic acid, methacrylic acid, phthalic acid (anhydride), maleic acid (anhydride), and itaconic acid (anhydride). Other examples include acrylonitrile, methacrylonitrile, acrylamide, methacrylamide, trimethyl-(3-acrylamide-3-dimethylpropyl)-ammonium chloride, and acrylamide-2-methylpropanesulfonic acid and its sodium salt. Further examples include ethyl vinyl ether, butyl vinyl ether, N-vinylpyrrolidone, vinyl chloride, vinyl bromide, vinyl fluoride, vinylidene chloride, vinylidene fluoride, tetrafluoroethylene, sodium vinyl sulfonate, and sodium allyl sulfonate. A terminal-modified polyvinyl alcohol may also be used which can be obtained by copolymerizing a vinyl ester monomer such as vinyl acetate and ethylene in the presence of a thiol compound such as thiolacetic acid or mercaptopropionic acid and saponifying the copolymer.

The polyvinyl alcohol resin, a raw material of the polyvinyl acetal resin, preferably has a degree of saponification of 80.0 mol% or greater and 99.9 mol% or less, more preferably 85.0 mol% or greater and 95.0 mol% or less.

Using the polyvinyl alcohol resin can further increase the dispersibility of the active material.

The acetalization may be carried out by a known method and is preferably carried out in a water solvent, a solvent mixture containing water and an organic solvent compatible with water, or an organic solvent.

The organic solvent compatible with water may be, for example, an alcoholic organic solvent.

Examples of the organic solvent include alcoholic organic solvents, aromatic organic solvents, aliphatic ester solvents, ketone solvents, lower paraffin solvents, ether solvents, amide solvents, and amine solvents.

The acetalization is preferably carried out in the presence of an acid catalyst.

The acid catalyst is not limited, and examples thereof include mineral acids such as sulfuric acid, hydrochloric acid, nitric acid, and phosphoric acid, carboxylic acids such as formic acid, acetic acid, and propionic acid, and sulfonic acids such as methanesulfonic acid, ethanesulfonic acid, benzenesulfonic acid, and p-toluenesulfonic acid. Each of these acid catalysts may be used alone, or two or more compounds may be used in combination. Preferred among these are hydrochloric acid, nitric acid, and sulfuric acid, and particularly preferred is hydrochloric acid.

Examples of aldehydes used for typical acetalization include aldehydes having a C1-C10 chain aliphatic group, a C1-C10 cyclic aliphatic group, or a C1-C10 aromatic group. These aldehydes may be conventionally known aldehydes. The aldehyde used for the acetalization reaction is not limited, and examples thereof include aliphatic aldehydes and aromatic aldehydes.

Examples of the aliphatic aldehydes include formaldehyde, acetaldehyde, propionaldehyde, n-butyraldehyde, isobutyraldehyde, n-valeraldehyde, n-hexylaldehyde, 2-ethylbutyraldehyde, 2-ethylhexylaldehyde, n-heptylaldehyde, n-octylaldehyde, n-nonylaldehyde, n-decylaldehyde, and amylaldehyde.

Examples of the aromatic aldehydes include aromatic aldehydes such as benzaldehyde, cinnamaldehyde, 2-methylbenzaldehyde, 3-methylbenzaldehyde, 4-methylbenzaldehyde, p-hydroxybenzaldehyde, m-hydroxybenzaldehyde, phenylacetaldehyde, and β-phenylpropionaldehyde.

Cyclic multimers such as paraldehyde and metaldehyde may also be used.

Each of these aldehydes may be used alone, or two or more thereof may be used in combination. Preferred among these aldehydes are formaldehyde, acetaldehyde, butyraldehyde, 2-ethylhexylaldehyde, n-nonylaldehyde, and paraldehyde because they have excellent acetalization reactivity and can give a sufficient internal plasticization effect and in turn favorable flexibility to the resulting resin.

The amount of the aldehyde to be added can be appropriately determined according to the acetal group content of the aimed polyvinyl acetal resin. In particular, the amount may be 10 to 80 mol%, preferably 15 to 75 mol% relative to 100 mol% of the polyvinyl alcohol. The amount in the range is preferred because the acetalization reaction can be efficiently carried out and unreacted aldehyde can be easily removed.

The resin composition for a secondary battery electrode of the present invention may further contain additives such as other binders (e.g., polyvinylidene fluoride), flame retardant auxiliaries, defoamers, leveling agents, and tackifiers as long as the effects of the present invention are not impaired.

The method for producing the resin composition for a secondary battery electrode of the present invention is not limited. For example, a polyvinyl acetal resin obtained by acetalizing raw material polyvinyl alcohol and an active material are added to a non-aqueous solvent and mixed.

The mixing may be performed using any of various mixers such as a ball mill, a blender mill, or a triple roll mill.

The composition for a secondary battery electrode may be, for example, applied to an electrically conductive substrate and dried to form a secondary battery electrode.

The application method may be any of various application methods such as an extrusion coater, a reverse roller, a doctor blade, and an applicator.

### - Advantageous Effects of Invention

The present invention can provide a resin composition for a secondary battery electrode that is excellent in the dispersibility of active materials, resistance against electrolyte solutions, and coating film density and capable of achieving both high conductivity and adhesion.

### DESCRIPTION OF EMBODIMENTS

The present invention is more specifically described in the following with reference to, but not limited to, examples.

### (Production Example 1)

An amount of 120 g of a polyvinyl alcohol having a degree of saponification of 98 mol% and an average degree of polymerization of 150 was added to 1,400 g of pure water and stirred at a temperature of 90°C for about two hours for dissolution. This solution was cooled to 40°C. To the solution were then added 100 g of hydrochloric acid having a concentration of 35% by weight, 80 g of n-butyraldehyde, and 0.5 g of chloroacetaldehyde dimethyl acetal. Acetalization reaction was then performed with the solution temperature maintained at 50°C to precipitate a reaction product. The liquid temperature was then maintained at 50°C for six hours to complete the reaction, followed by neutralization, washing with water, and drying by conventional methods to give powder of a chlorine-modified polyvinyl acetal resin A1 including a structural unit containing a chlorine atom. The obtained chlorine-modified polyvinyl acetal resin was dissolved in DMSO-d₆ (dimethyl sulfoxide) and subjected to ¹H-NMR (nuclear magnetic resonance spectroscopy) to measure the hydroxy group content, the acetyl group content, the butyral group content (non-halogenated acetal group content), the chlorine-modified acetal-bond unit content (modification content), and the acetal group content. Table 1 shows the results.

The structural unit containing a chlorine atom was a structural unit represented by the formula (2) (R¹ = Cl, R² = H, R³ = H) .

### (Production Example 2)

An amount of 120 g of a polyvinyl alcohol having a degree of saponification of 98 mol% and an average degree of polymerization of 500 was added to 1,400 g of pure water and stirred at a temperature of 90°C for about two hours for dissolution. This solution was cooled to 40°C. To the solution were then added 100 g of hydrochloric acid having a concentration of 35% by weight, 30 g of n-butyraldehyde, and 2 g of chloroacetaldehyde dimethyl acetal. Acetalization reaction was then performed with the solution temperature maintained at 50°C to precipitate a reaction product. The liquid temperature was then maintained at 50°C for six hours to complete the reaction, followed by neutralization, washing with water, and drying by conventional methods to give powder of a chlorine-modified polyvinyl acetal resin A2 including a structural unit containing a chlorine atom. The obtained chlorine-modified polyvinyl acetal resin was dissolved in DMSO-d₆ (dimethyl sulfoxide) and subjected to ¹H-NMR (nuclear magnetic resonance spectroscopy) to measure the hydroxy group content, the acetyl group content, the butyral group content (non-halogenated acetal group content), the chlorine-modified acetal-bond unit content (modification content), and the acetal group content. Table 1 shows the results.

The structural unit containing a chlorine atom was a structural unit represented by the formula (2) (R¹ = Cl, R² = H, R³ = H) .

### (Production Example 3)

An amount of 120 g of a polyvinyl alcohol having a degree of saponification of 98 mol% and an average degree of polymerization of 1,000 was added to 1,400 g of pure water and stirred at a temperature of 90°C for about two hours for dissolution. This solution was cooled to 40°C. To the solution were then added 100 g of hydrochloric acid having a concentration of 35% by weight, 60 g of n-butyraldehyde, and 0.2 g of chloroacetaldehyde dimethyl acetal. Acetalization reaction was then performed with the solution temperature maintained at 50°C to precipitate a reaction product. The liquid temperature was then maintained at 50°C for six hours to complete the reaction, followed by neutralization, washing with water, and drying by conventional methods to give powder of a chlorine-modified polyvinyl acetal resin A3 including a structural unit containing a chlorine atom. The obtained chlorine-modified polyvinyl acetal resin was dissolved in DMSO-d₆ (dimethyl sulfoxide) and subjected to ¹H-NMR (nuclear magnetic resonance spectroscopy) to measure the hydroxy group content, the acetyl group content, the butyral group content (non-halogenated acetal group content), the chlorine-modified acetal-bond unit content (modification content), and the acetal group content. Table 1 shows the results.

The structural unit containing a chlorine atom was a structural unit represented by the formula (2) (R¹ = Cl, R² = H, R³ = H).

### (Production Example 4)

An amount of 120 g of a polyvinyl alcohol having a degree of saponification of 98 mol% and an average degree of polymerization of 1,500 was added to 1,400 g of pure water and stirred at a temperature of 90°C for about two hours for dissolution. This solution was cooled to 40°C. To the solution were then added 100 g of hydrochloric acid having a concentration of 35% by weight, 60 g of n-butyraldehyde, and 0.4 g of 4-bromobenzaldehyde. Acetalization reaction was then performed with the solution temperature maintained at 50°C to precipitate a reaction product. The liquid temperature was then maintained at 50°C for six hours to complete the reaction, followed by neutralization, washing with water, and drying by conventional methods to give powder of a bromine-modified polyvinyl acetal resin A4 including a structural unit containing a bromine atom. The obtained bromine-modified polyvinyl acetal resin was dissolved in DMSO-d₆ (dimethyl sulfoxide) and subjected to ¹H-NMR (nuclear magnetic resonance spectroscopy) to measure the hydroxy group content, the acetyl group content, the butyral group content (non-halogenated acetal group content), the bromine-modified acetal-bond unit content (modification content), and the acetal group content. Table 1 shows the results.

The structural unit containing a bromine atom was a structural unit represented by the formula (1) (R¹ = 4-bromophenyl group).

### (Production Example 5)

An amount of 120 g of a polyvinyl alcohol having a degree of saponification of 92 mol% and an average degree of polymerization of 2,000 was added to 1,400 g of pure water and stirred at a temperature of 90°C for about two hours for dissolution. This solution was cooled to 40°C. To the solution were then added 100 g of hydrochloric acid having a concentration of 35% by weight, 50 g of n-butyraldehyde, and 30 g of chloroacetaldehyde dimethyl acetal. Acetalization reaction was then performed with the solution temperature maintained at 50°C to precipitate a reaction product. The liquid temperature was then maintained at 50°C for six hours to complete the reaction, followed by neutralization, washing with water, and drying by conventional methods to give powder of a chlorine-modified polyvinyl acetal resin A5 including a structural unit containing a chlorine atom. The obtained chlorine-modified polyvinyl acetal resin was dissolved in DMSO-d₆ (dimethyl sulfoxide) and subjected to ¹H-NMR (nuclear magnetic resonance spectroscopy) to measure the hydroxy group content, the acetyl group content, the butyral group content (non-halogenated acetal group content), the chlorine-modified acetal-bond unit content (modification content), and the acetal group content. Table 1 shows the results.

The structural unit containing a chlorine atom was a structural unit represented by the formula (2) (R¹ = Cl, R² = H, R³ = H) .

### (Production Example 6)

An amount of 120 g of a polyvinyl alcohol having a degree of saponification of 98 mol% and an average degree of polymerization of 3,000 was added to 1,400 g of pure water and stirred at a temperature of 90°C for about two hours for dissolution. This solution was cooled to 40°C. To the solution were then added 100 g of hydrochloric acid having a concentration of 35% by weight, 80 g of n-butyraldehyde, and 0.5 g of chloroacetaldehyde dimethyl acetal. Acetalization reaction was then performed with the solution temperature maintained at 50°C to precipitate a reaction product. The liquid temperature was then maintained at 50°C for six hours to complete the reaction, followed by neutralization, washing with water, and drying by conventional methods to give powder of a chlorine-modified polyvinyl acetal resin A6 including a structural unit containing a chlorine atom. The obtained chlorine-modified polyvinyl acetal resin was dissolved in DMSO-d₆ (dimethyl sulfoxide) and subjected to ¹H-NMR (nuclear magnetic resonance spectroscopy) to measure the hydroxy group content, the acetyl group content, the butyral group content (non-halogenated acetal group content), the chlorine-modified acetal-bond unit content (modification content), and the acetal group content. Table 1 shows the results.

The structural unit containing a chlorine atom was a structural unit represented by the formula (2) (R¹ = Cl, R² = H, R³ = H) .

### (Production Example 7)

An amount of 120 g of a polyvinyl alcohol having a degree of saponification of 98 mol% and an average degree of polymerization of 4,000 was added to 1,400 g of pure water and stirred at a temperature of 90°C for about two hours for dissolution. This solution was cooled to 40°C. To the solution were then added 100 g of hydrochloric acid having a concentration of 35% by weight, 80 g of n-butyraldehyde, and 0.5 g of 4-bromobenzaldehyde. Acetalization reaction was then performed with the solution temperature maintained at 50°C to precipitate a reaction product. The liquid temperature was then maintained at 50°C for six hours to complete the reaction, followed by neutralization, washing with water, and drying by conventional methods to give powder of a bromine-modified polyvinyl acetal resin A7 including a structural unit containing a bromine atom. The obtained bromine-modified polyvinyl acetal resin was dissolved in DMSO-d₆ (dimethyl sulfoxide) and subjected to ¹H-NMR (nuclear magnetic resonance spectroscopy) to measure the hydroxy group content, the acetyl group content, the butyral group content (non-halogenated acetal group content), the bromine-modified acetal-bond unit content (modification content), and the acetal group content. Table 1 shows the results.

The structural unit containing a bromine atom was a structural unit represented by the formula (1) (R¹ = 4-bromophenyl group).

### (Production Example 8)

An amount of 120 g of a polyvinyl alcohol having a degree of saponification of 88 mol% and an average degree of polymerization of 5,000 was added to 1,400 g of pure water and stirred at a temperature of 90°C for about two hours for dissolution. This solution was cooled to 40°C. To the solution were then added 100 g of hydrochloric acid having a concentration of 35% by weight, 30 g of n-butyraldehyde, and 0.2 g of chloroacetaldehyde dimethyl acetal. Acetalization reaction was then performed with the solution temperature maintained at 50°C to precipitate a reaction product. The liquid temperature was then maintained at 50°C for six hours to complete the reaction, followed by neutralization, washing with water, and drying by conventional methods to give powder of a chlorine-modified polyvinyl acetal resin A8 including a structural unit containing a chlorine atom. The obtained chlorine-modified polyvinyl acetal resin was dissolved in DMSO-d₆ (dimethyl sulfoxide) and subjected to ¹H-NMR (nuclear magnetic resonance spectroscopy) to measure the hydroxy group content, the acetyl group content, the butyral group content (non-halogenated acetal group content), the chlorine-modified acetal-bond unit content (modification content), and the acetal group content. Table 1 shows the results.

The structural unit containing a chlorine atom was a structural unit represented by the formula (2) (R¹ = Cl, R² = H, R³ = H) .

### (Production Example 9)

An amount of 120 g of a polyvinyl alcohol having a degree of saponification of 98 mol% and a degree of polymerization of 2,000 was added to 1,400 g of pure water and stirred at a temperature of 90°C for about two hours for dissolution. This solution was cooled to 40°C. To the solution were added 100 g of hydrochloric acid having a concentration of 35% by weight, 50 g of n-butyraldehyde, 2.0 g of chloroacetaldehyde dimethyl acetal, and 0.5 g of 4-bromobenzaldehyde. Acetalization reaction was then performed with the solution temperature maintained at 50°C to precipitate a reaction product. The liquid temperature was then maintained at 50°C for six hours to complete the reaction, followed by neutralization, washing with water, and drying by conventional methods to give powder of a chlorine-modified and bromine-modified polyvinyl acetal resin A9 including a structural unit containing a chlorine atom and a structural unit containing a bromine atom. The obtained chlorine-modified and bromine-modified polyvinyl acetal resin was dissolved in DMSO-d₆ (dimethyl sulfoxide) and subjected to ¹H-NMR (nuclear magnetic resonance spectroscopy) to measure the hydroxy group content, the acetyl group content, the butyral group content (non-halogenated acetal group content), the chlorine-modified acetal-bond unit content (chlorine modification content), the bromine-modified acetal-bond unit content (bromine modification content), and the acetal group content. Table 1 shows the results.

The structural unit containing a chlorine atom was a structural unit represented by the formula (2) (R¹ = Cl, R² = H, R³ = H). The structural unit containing a bromine atom was a structural unit represented by the formula (1) (R¹ = 4-bromophenyl group).

### (Production Example 10)

An amount of 120 g of a fluorine-modified polyvinyl alcohol (modification content 1 mol%) having a degree of saponification of 92 mol% and an average degree of polymerization of 4,000 was added to 1,400 g of pure water and stirred at a temperature of 90°C for about two hours for dissolution. This solution was cooled to 40°C. To the solution were added 100 g of hydrochloric acid having a concentration of 35% by weight and 70 g of n-butyraldehyde. Acetalization reaction was then performed with the solution temperature maintained at 50°C to precipitate a reaction product. The liquid temperature was then maintained at 50°C for six hours to complete the reaction, followed by neutralization, washing with water, and drying by conventional methods to give powder of a fluorine-modified polyvinyl acetal resin A10 including a structural unit containing a fluorine atom. The obtained fluorine-modified polyvinyl acetal resin was dissolved in DMSO-d₆ (dimethyl sulfoxide) and subjected to ¹H-NMR (nuclear magnetic resonance spectroscopy) to measure the hydroxy group content, the acetyl group content, the butyral group content (non-halogenated acetal group content), the fluorine-modified side-chain-bond unit content (modification content), and the acetal group content. Table 1 shows the results.

The structural unit containing a fluorine atom was a structural unit represented by the formula (3) (X = F, R⁴ = single bond, R⁵ = H).

### (Production Example 11)

An amount of 120 g of a chlorine-modified polyvinyl alcohol (modification content 10 mol%) having a degree of saponification of 98 mol% and an average degree of polymerization of 3,000 was added to 1,400 g of pure water and stirred at a temperature of 90°C for about two hours for dissolution. This solution was cooled to 40°C. To the solution were added 100 g of hydrochloric acid having a concentration of 35% by weight, 50 g of n-butyraldehyde, and 30 g of 4-bromobenzaldehyde. Acetalization reaction was then performed with the solution temperature maintained at 50°C to precipitate a reaction product. The liquid temperature was then maintained at 50°C for six hours to complete the reaction, followed by neutralization, washing with water, and drying by conventional methods to give powder of a chlorine-modified and bromine-modified polyvinyl acetal resin A11 including a structural unit containing a chlorine atom and a structural unit containing a bromine atom. The obtained chlorine-modified and bromine-modified polyvinyl acetal resin was dissolved in DMSO-d₆ (dimethyl sulfoxide) and subjected to ¹H-NMR (nuclear magnetic resonance spectroscopy) to measure the hydroxy group content, the acetyl group content, the butyral group content (non-halogenated acetal group content), the chlorine-modified side-chain-bond unit content (chlorine modification content), the bromine-modified acetal-bond unit content (bromine modification content), and the acetal group content. Table 1 shows the results.

The structural unit containing a bromine atom was a structural unit represented by the formula (1) (R¹ = 4-bromophenyl group) and the structural unit containing a chlorine atom was a structural unit represented by the formula (3) (X = Cl, R⁴ = single bond, R⁵ = H).

### (Production Example 12)

An amount of 60 g of a chlorine-modified polyvinyl alcohol (modification content 1 mol%) having a degree of saponification of 98 mol% and an average degree of polymerization of 500 and 60 g of a fluorine-modified polyvinyl alcohol (modification content 1 mol%) having a degree of saponification of 98 mol% and an average degree of polymerization of 1,000 were added to 1,400 g of pure water and stirred at a temperature of 90°C for about two hours for dissolution. This solution was cooled to 40°C. To the solution were added 100 g of hydrochloric acid having a concentration of 35% by weight and 50 g of n-butyraldehyde. Acetalization reaction was then performed with the solution temperature maintained at 50°C to precipitate a reaction product. The liquid temperature was then maintained at 50°C for six hours to complete the reaction, followed by neutralization, washing with water, and drying by conventional methods to give powder of a chlorine-modified and fluorine-modified polyvinyl acetal resin A12 including a structural unit containing a chlorine atom and a structural unit containing a fluorine atom. The obtained chlorine-modified and fluorine-modified polyvinyl acetal resin was dissolved in DMSO-d₆ (dimethyl sulfoxide) and subjected to ¹H-NMR (nuclear magnetic resonance spectroscopy) to measure the hydroxy group content, the acetyl group content, the butyral group content (non-halogenated acetal group content), the chlorine-modified side-chain-bond unit content (chlorine modification content), the fluorine-modified side-chain-bond unit content (fluorine modification content), and the acetal group content. Table 1 shows the results.

The structural unit containing a chlorine atom was a structural unit represented by the formula (3) (X = Cl, R⁴ = single bond, R⁵ = H), and the structural unit containing a fluorine atom was a structural unit represented by the formula (3) (X = F, R⁴ = single bond, R⁵ = H).

### (Production Example 13)

An amount of 120 g of a polyvinyl alcohol having a degree of saponification of 98 mol% and an average degree of polymerization of 100 was added to 1,400 g of pure water and stirred at a temperature of 90°C for about two hours for dissolution. This solution was cooled to 40°C. To the solution were added 100 g of hydrochloric acid having a concentration of 35% by weight, 70 g of n-butyraldehyde, and 0.5 g of 4-trifluoromethylbenzaldehyde. Acetalization reaction was then performed with the solution temperature maintained at 50°C to precipitate a reaction product. The liquid temperature was then maintained at 50°C for six hours to complete the reaction, followed by neutralization, washing with water, and drying by conventional methods to give powder of a fluorine-modified polyvinyl acetal resin A13 including a structural unit containing a fluorine atom. The obtained fluorine-modified polyvinyl acetal resin was dissolved in DMSO-d₆ (dimethyl sulfoxide) and subjected to ¹H-NMR (nuclear magnetic resonance spectroscopy) to measure the hydroxy group content, the acetyl group content, the butyral group content (non-halogenated acetal group content), the fluorine-modified acetal-bond unit content (modification content), and the acetal group content. Table 1 shows the results.

The structural unit containing a fluorine atom was a structural unit represented by the formula (1) (R¹ = 4-trifluoromethylphenyl group).

### (Production Example 14)

An amount of 120 g of a polyvinyl alcohol having a degree of saponification of 98 mol% and an average degree of polymerization of 5,500 was added to 1,400 g of pure water and stirred at a temperature of 90°C for about two hours for dissolution. This solution was cooled to 40°C. To the solution were added 100 g of hydrochloric acid having a concentration of 35% by weight, 30 g of n-butyraldehyde, and 30 g of 4-trifluoromethylbenzaldehyde. Acetalization reaction was then performed with the solution temperature maintained at 50°C to precipitate a reaction product. The liquid temperature was then maintained at 50°C for six hours to complete the reaction, followed by neutralization, washing with water, and drying by conventional methods to give powder of a fluorine-modified polyvinyl acetal resin A14 including a structural unit containing a fluorine atom. The obtained fluorine-modified polyvinyl acetal resin was dissolved in DMSO-d₆ (dimethyl sulfoxide) and subjected to ¹H-NMR (nuclear magnetic resonance spectroscopy) to measure the hydroxy group content, the acetyl group content, the butyral group content (non-halogenated acetal group content), the fluorine-modified acetal-bond unit content (modification content), and the acetal group content. Table 1 shows the results.

The structural unit containing a fluorine atom was a structural unit represented by the formula (1) (R¹ = 4-trifluoromethylphenyl group).

### (Production Example 15)

An amount of 120 g of a polyvinyl alcohol having a degree of saponification of 92 mol% and an average degree of polymerization of 1,000 was added to 1,400 g of pure water and stirred at a temperature of 90°C for about two hours for dissolution. This solution was cooled to 40°C. To the solution were added 100 g of hydrochloric acid having a concentration of 35% by weight, 80 g of n-butyraldehyde, and 0.5 g of chloroacetaldehyde dimethyl acetal. Acetalization reaction was then performed with the solution temperature maintained at 50°C to precipitate a reaction product. The liquid temperature was then maintained at 50°C for six hours to complete the reaction, followed by neutralization, washing with water, and drying by conventional methods to give powder of a chlorine-modified polyvinyl acetal resin A15 including a structural unit containing a chlorine atom. The obtained chlorine-modified polyvinyl acetal resin was dissolved in DMSO-d₆ (dimethyl sulfoxide) and subjected to ¹H-NMR (nuclear magnetic resonance spectroscopy) to measure the hydroxy group content, the acetyl group content, the butyral group content (non-halogenated acetal group content), the chlorine-modified acetal-bond unit content (modification content), and the acetal group content. Table 1 shows the results.

The structural unit containing a chlorine atom was a structural unit represented by the formula (2) (R¹ = Cl, R² = H, R³ = H) .

### (Production Example 16)

### (Synthesis of bromine-modified polyvinyl alcohol)

Vinyl bromide and vinyl acetate were copolymerized. Then, to a solution of the obtained copolymer in alcohol was added an acid or alkali for saponification, whereby a polyvinyl alcohol (modification content 0.01 mol%) including a structural unit containing a bromine atom was prepared.

### (Synthesis of bromine-modified polyvinyl acetal resin)

An amount of 120 g of the bromine-modified polyvinyl alcohol (modification content 0.01 mol%) having a degree of saponification of 98 mol% and an average degree of polymerization of 3,000 was added to 1,400 g of pure water and stirred at a temperature of 90°C for about two hours for dissolution. This solution was cooled to 40°C. To the solution were added 100 g of hydrochloric acid having a concentration of 35% by weight and 30 g of n-butyraldehyde. Acetalization reaction was then performed with the solution temperature maintained at 50°C to precipitate a reaction product. The liquid temperature was then maintained at 50°C for six hours to complete the reaction, followed by neutralization, washing with water, and drying by conventional methods to give powder of a bromine-modified polyvinyl acetal resin A16 including a structural unit containing a bromine atom. The obtained bromine-modified polyvinyl acetal resin was dissolved in DMSO-d₆ (dimethyl sulfoxide) and subjected to ¹H-NMR (nuclear magnetic resonance spectroscopy) to measure the hydroxy group content, the acetyl group content, the butyral group content (non-halogenated acetal group content), the bromine-modified side-chain-bond unit content (modification content), and the acetal group content. Table 1 shows the results.

The structural unit containing a bromine atom was a structural unit represented by the formula (3) (X = Br, R⁴ = single bond, R⁵ = H) .

### (Production Example 17)

An amount of 120 g of a polyvinyl alcohol having a degree of saponification of 98 mol% and an average degree of polymerization of 1,500 was added to 1,400 g of pure water and stirred at a temperature of 90°C for about two hours for dissolution. This solution was cooled to 40°C. To the solution were added 100 g of hydrochloric acid having a concentration of 35% by weight, 20 g of acetaldehyde, 20 g of chloroacetaldehyde dimethyl acetal, and 30 g of n-butyraldehyde. Acetalization reaction was then performed with the solution temperature maintained at 50°C to precipitate a reaction product. The liquid temperature was then maintained at 50°C for six hours to complete the reaction, followed by neutralization, washing with water, and drying by conventional methods to give powder of a chlorine-modified polyvinyl acetal resin A17 including a structural unit containing a chlorine atom. The obtained chlorine-modified polyvinyl acetal resin was dissolved in DMSO-d₆ (dimethyl sulfoxide) and subjected to ¹H-NMR (nuclear magnetic resonance spectroscopy) to measure the hydroxy group content, the acetyl group content, the sum of the acetoacetal group content and the butyral group content (non-halogenated acetal group content), the chlorine-modified acetal-bond unit content (modification content), and the acetal group content. Table 1 shows the results.

The structural unit containing a chlorine atom was a structural unit represented by the formula (2) (R¹ = Cl, R² = H, R³ = H) .

### (Production Example 18)

### (Synthesis of fluorine-modified polyvinyl alcohol)

Vinylidene fluoride and vinyl acetate were copolymerized, and to a solution of the obtained copolymer in alcohol was added an acid for saponification, whereby a fluorine-modified polyvinyl alcohol (degree of saponification 98 mol%, fluorine-modified side-chain-bond unit content 10 mol%, average degree of polymerization of 3,000) was prepared.

An amount of 120 g of the obtained fluorine-modified polyvinyl alcohol was added to 1,400 g of pure water and stirred at a temperature of 90°C for about two hours for dissolution. This solution was cooled to 40°C. To the solution were added 100 g of hydrochloric acid having a concentration of 35% by weight, 20 g of chloroacetaldehyde dimethyl acetal, and 70 g of n-butyraldehyde. Acetalization reaction was then performed with the solution temperature maintained at 50°C to precipitate a reaction product. The liquid temperature was then maintained at 50°C for six hours to complete the reaction, followed by neutralization, washing with water, and drying by conventional methods to give powder of a fluorine-modified and chlorine-modified polyvinyl acetal resin A18 including a structural unit containing a fluorine atom and a structural unit containing a chlorine atom. The obtained fluorine-modified and chlorine-modified polyvinyl acetal resin was dissolved in DMSO-d₆ (dimethyl sulfoxide) and subjected to ¹H-NMR (nuclear magnetic resonance spectroscopy) to measure the hydroxy group content, the acetyl group content, the butyral group content (non-halogenated acetal group content), the fluorine-modified acetal-bond unit content (modification content), the chlorine-modified acetal-bond unit content (modification content), and the acetal group content. The structural unit containing a fluorine atom was a structural unit represented by the formula (3) (X = F, R⁴ = single bond, R⁵ = H), and the structural unit containing a chlorine atom was a structural unit represented by the formula (2) (R¹ = Cl, R² = H, R³ = H).

### (Production Example 19)

An amount of 120 g of a polyvinyl alcohol having a degree of saponification of 88 mol% and an average degree of polymerization of 500 was added to 1,400 g of pure water and stirred at a temperature of 90°C for about two hours for dissolution. This solution was cooled to 40°C. To the solution were added 100 g of hydrochloric acid having a concentration of 35% by weight and 50 g of n-butyraldehyde. Acetalization reaction was then performed with the solution temperature maintained at 50°C to precipitate a reaction product. The liquid temperature was then maintained at 50°C for six hours to complete the reaction, followed by neutralization, washing with water, and drying by conventional methods to give powder of a polyvinyl acetal resin B1. The polyvinyl acetal resin was dissolved in DMSO-d₆ (dimethyl sulfoxide) and subjected to ¹H-NMR (nuclear magnetic resonance spectroscopy) to measure the hydroxy group content, the acetyl group content, the butyral group content (non-halogenated acetal group content), and the acetal group content. Table 1 shows the results.

### (Production Example 20)

An amount of 120 g of an ethylene oxide (EO)-modified polyvinyl alcohol (produced by Mitsubishi Chemical Corporation) having a degree of saponification of 88 mol% and an average degree of polymerization of 700 was added to 1,400 g of pure water and stirred at a temperature of 90°C for about two hours for dissolution. This solution was cooled to 40°C. To the solution were added 100 g of hydrochloric acid having a concentration of 35% by weight, 40 g of n-butyraldehyde, and 40 g of chloroacetaldehyde dimethyl acetal. Acetalization reaction was then performed with the solution temperature maintained at 50°C to precipitate a reaction product. The liquid temperature was then maintained at 50°C for six hours to complete the reaction, followed by neutralization, washing with water, and drying by conventional methods to give powder of an ethylene oxide-modified and chlorine-modified polyvinyl acetal resin B2 including a structural unit containing a chlorine atom. The obtained ethylene oxide-modified and chlorine-modified polyvinyl acetal resin was dissolved in DMSO-d₆ (dimethyl sulfoxide) and then subjected to ¹H-NMR (nuclear magnetic resonance spectroscopy) to measure the hydroxy group content, the acetyl group content, the butyral group content (non-halogenated acetal group content), the chlorine-modified acetal-bond unit content (chlorine modification content), the ethylene oxide modification content (EO modification content), and the acetal group content. Table 1 shows the results.

The structural unit containing a chlorine atom was a structural unit represented by the formula (2) (R¹ = Cl, R² = H, R³ = H) .

### (Production Example 21)

### (Synthesis of fluorine-modified polyvinyl alcohol)

Vinylidene fluoride and vinyl acetate were copolymerized. Then, to a solution of the obtained copolymer in alcohol was added an acid for saponification, whereby a fluorine-modified polyvinyl alcohol (degree of saponification 98 mol%, fluorine-modified side chain-bond unit content 50 mol%, average degree of polymerization 1,000) was prepared.

An amount of 120 g of the obtained fluorine-modified polyvinyl alcohol was added to 1,400 g of pure water and stirred at a temperature of 90°C for about two hours for dissolution. This solution was cooled to 40°C. To the solution were added 100 g of hydrochloric acid having a concentration of 35% by weight and 80 g of n-butyraldehyde. Acetalization reaction was then performed with the solution temperature maintained at 50°C to precipitate a reaction product. The liquid temperature was then maintained at 50°C for six hours to complete the reaction, followed by neutralization, washing with water, and drying by conventional methods to give powder of a fluorine-modified polyvinyl acetal resin B3 including a structural unit containing a fluorine atom. The obtained fluorine-modified polyvinyl acetal resin was dissolved in DMSO-d₆ (dimethyl sulfoxide) and subjected to ¹H-NMR (nuclear magnetic resonance spectroscopy) to measure the hydroxy group content, the acetyl group content, the butyral group content (non-halogenated acetal group content), the fluorine-modified acetal-bond unit content (modification content), and the acetal group content. The structural unit containing a fluorine atom was a structural unit represented by the formula (3) (X = F, R⁴ = single bond, R⁵ = H) .

**[Table 1]**

| | PVA | | | | | | Additives (g) | | | | PVB | | | | | | |
|---|---|---|---|---|---|---|---|---|---|---|---|---|---|---|---|---|---|
| | Resin name | Average degree of polymerization | Mixing ratio | Degree of saponification (mol%) | Modification type | Modification content (mol%) | Halogen atom-containing compound | | Acetaldehyde | Butyraldehyde | Average degree of polymerization | Hydroxy group content (mol%) | Non-halogenated acetal group content (mol%) | Acetyl group content (mol%) | Modification type | Modification content (mol%) | Acetal group content (mol%) |
| Production Example 1 | A1 | 150 | - | 98 | - | - | Chlorine atom-containing | 0.5 | - | 80 | 150 | 40 | 57.99 | 2 | Chlorine | 0.01 | 58.0 |
| Production Example 2 | A2 | 500 | - | 98 | - | - | Chlorine atom-containing | 2 | - | 30 | 500 | 80 | 17.0 | 2 | Chlorine | 1 | 180 |
| Production Example 3 | A3 | 1000 | - | 98 | - | - | Chlorine atom-containing | 0.2 | - | 60 | 1000 | 50 | 47.9 | 2 | Chlorine | 0.1 | 48.0 |
| Production Example 4 | A4 | 1500 | - | 98 | - | - | Bromine atom-containing | 0.4 | - | 60 | 1500 | 50 | 47.9 | 2 | Bromine | 0.1 | 48.0 |
| Production Example 5 | A5 | 2000 | - | 92 | - | - | Chlorine atom-containing | 30 | - | 50 | 2000 | 60 | 220 | 8 | Chlorine | 10 | 320 |
| Production Example 6 | A6 | 3000 | - | 98 | - | - | Chlorine atom-containing | 0.5 | - | 80 | 3000 | 40 | 57.99 | 2 | Chlorine | 0.01 | 58.0 |
| Production Example 7 | A7 | 4000 | - | 98 | - | - | Bromine atom-containing | 0.5 | - | 80 | 4000 | 40 | 57.99 | 2 | Bromine | 0.01 | 58.0 |
| Production Example 8 | A8 | 5000 | - | 88 | - | - | Chlorine atom-containing | 0.2 | - | 30 | 5000 | 70 | 17.9 | 12 | Chlorine | 0.1 | 18.0 |
| Production Example 9 | A9 | 2000 | - | 98 | - | - | Chlorine atom-containing | 2 | - | 50 | 2000 | 60 | 36.99 | 2 | Chlorine | 1 | 38.0 |
| | | | | | - | - | Bromine atom-containing | 0.5 | | | | | | | Bromine | 0.01 | |
| Production Example 10 | A10 | 4000 | - | 92 | Fluorine | 1 | - | - | - | 70 | 4000 | 40 | 510 | 8 | Fluorine | 1 | 510 |
| Production Example 11 | A11 | 3000 | - | 98 | Chlorine | 10 | Bromine atom-containing | 30 | - | 50 | 2000 | 45 | 38.7 | 1.8 | Chlorine | 10 | 43.2 |
| | | | | | | | | | | | | | | | Bromine | 4.5 | |
| Production Example 12 | A12 | 500 | 50 | 98 | Chlorine | 1 | - | - | - | 50 | 750 | 60 | 36.0 | 2 | Chlorine | 1 | 360 |
| | | 1000 | 50 | 98 | Fluorine | 1 | - | - | | | | | | | Fluorine | 1 | |
| Production Example 13 | A13 | 100 | - | 98 | - | - | Fluorine atom-containing | 0.5 | - | 70 | 100 | 45 | 52.9 | 2 | Fluorine | 0.1 | 53.0 |
| Production Example 14 | A14 | 5500 | - | 98 | - | - | Fluorine atom-containing | 30 | - | 30 | 5500 | 75 | 130 | 2 | Fluorine | 10 | 230 |
| Production Example 15 | A15 | 1000 | - | 92 | - | - | Chlorine atom-containing | 0.5 | - | 80 | 1000 | 35 | 56.99 | 8 | Chlorine | 0.01 | 57.0 |
| Production Example 16 | A16 | 3000 | - | 98 | Bromine | 0.01 | - | - | - | 30 | 3000 | 85 | 12.99 | 2 | Bromine | 0.01 | 12.99 |
| Production Example 17 | A17 | 1500 | - | 98 | - | - | Chlorine atom-containing | 20 | 20 | 30 | 1500 | 35 | 530 | 2 | Chlorine | 10 | 630 |
| Production Example 18 | A18 | 3000 | - | 98 | Fluorine | 10 | Chlorine atom-containing | 20 | - | 70 | 3000 | 40 | 38.0 | 2 | Fluorine | 10 | 48.0 |
| | | | | | | | | | | | | | | | Chlorine | 10 | |
| Production Example 19 | B1 | 500 | - | 88 | - | - | - | 0 | - | 50 | 500 | 60 | 280 | 12 | - | 0 | 60.0 |
| Production Example 20 | B2 | 700 | - | 88 | EO | 10 | Chlorine atom-containing | 40 | - | 40 | 4000 | 45 | 220 | 8 | EO | 10 | 370 |
| | | | | | | | | | | | | | | | Chlorine | 15 | |
| Production Example 21 | B3 | 1000 | - | 98 | Fluorine | 50 | - | - | - | 80 | 1000 | 20 | 29.0 | 1 | Fluorine | 50 | 29.0 |

### (Example 1)

To 20 parts by weight of a resin solution containing the obtained polyvinyl acetal resin A1 (polyvinyl acetal resin: 2.5 parts by weight, solvent: N-methylpyrrolidone) were added 50 parts by weight of lithium cobalt oxide (produced by Nippon Chemical Industrial Co., Ltd., CELLSEED C-5H) as an active material, 5 parts by weight of acetylene black (produced by Denka Company Limited., DENKA BLACK) as a conductivity-imparting agent, and 25 parts by weight of N-methylpyrrolidone. They were then mixed using Thinky Mixer produced by Thinky Corporation to give a composition for a secondary battery electrode.

### (Examples 2 to 18 and Comparative Examples 1 to 3)

A composition for a secondary battery electrode was obtained as in Example 1 except that the type of the polyvinyl acetal resin, the amount of the resin added, and the active material were changed as shown in Table 2.

### (Comparative Example 4)

A composition for a secondary battery electrode was obtained as in Example 1 except that polyvinylidene fluoride (PVDF) was used instead of the obtained polyvinyl acetal resin.

### (Comparative Example 5)

A composition for a secondary battery electrode was obtained as in Example 1 except that polyvinyl chloride (PVC) was used instead of the obtained polyvinyl acetal resin.

### <Evaluation>

The polyvinyl acetal resins and the compositions for a secondary battery electrode obtained in the examples and the comparative examples were evaluated as follows. Table 1 shows the results.

### (1) Vicat softening temperature

The Vicat softening temperature of the polyvinyl acetal resin was measured by a method in conformity with JIS K 7206:2016 (Plastics-Thermoplastic materials-Determination of Vicat softening temperature (VST), A50 method).

Specifically, powder of the resin was compression-molded and cut into pieces, each about 15 mm square, to prepare sheet measurement samples each having a thickness of 2 mm. Two measurement samples were stacked for measurement.

The device used was a HDT tester (Model 3M-2, produced by Toyo Seiki Seisaku-Sho, Ltd.). The measurement was performed in conformity with JIS K7206:2016, A50 method (test load: 10 N, temperature increase rate: 50°C/h). The test start temperature was 30°C, and the maximum depth of penetration was 1 mm.

### (2) Adhesion

The obtained resin composition was applied to aluminum foil (thickness 20 um) to a dried thickness of 20 um and dried to prepare a specimen including a sheet of the resin composition on the aluminum foil.

This specimen was cut into a size of 1 cm in length and 2 cm in width. With AUTOGRAPH (produced by Shimadzu Corporation, "AGS-J"), the sheet was pulled up while the specimen was fixed, and the peeling force (N) necessary to completely separate the sheet from the aluminum foil was measured.

### (3) Average surface roughness (surface roughness, dispersibility)

The obtained resin composition was applied to a release-treated polyethylene terephthalate (PET) film to a dried thickness of 20 µm, dried, and separated from the PET film. A sheet was thus prepared.

The average surface roughness Rz of the obtained sheet was measured in conformity with JIS B 0601 (1994).

### (4) Coating film density

The obtained resin composition was applied to aluminum foil (thickness 20 um) to a dried thickness of 20 um and dried to form a specimen including a sheet of the resin composition on the aluminum foil.

The obtained specimen was left to stand at 20°C for 24 hours. The sheet thickness after the standing was measured. The change rate was calculated from the change in the thickness before and after the test, and evaluated based on the following criteria.
∘ (Good): A change rate of less than 3.0%
× (Poor): A change rate of 3.0% or greater

### (5) Resistance against electrolyte solution (solubility in solvent)

### (Preparation of electrode sheet)

The compositions for a secondary battery electrode obtained in the examples and the comparative examples were each applied to a release-treated polyalkylene terephthalate (PET) film to a dried thickness of 20 um and dried to prepare an electrode sheet.

The electrode sheet was cut into a 2-cm square electrode sheet specimen.

### (Elution evaluation)

The obtained specimen was accurately weighed, and the weight of the resin contained in the specimen was calculated from the weight ratio between the components contained in the sheet. Then, the specimen was placed in a mesh bag, and the sum of the weight of the mesh bag and the weight of the specimen was accurately measured.

The mesh bag containing the specimen was immersed in a solvent mixture (diethyl carbonate:alkylene carbonate = 1:1), which was a solvent of an electrolyte solution, and left to stand at 60°C for five hours. After the standing, the mesh bag was taken out and dried under the conditions of 150°C and eight hours to completely vaporize the solvent.

The mesh bag was taken out from the dryer, left to stand at room temperature for one hour, and weighed. The amount of the eluted resin was calculated based on the weight change before and after the test, and the resin elution rate was calculated based on the ratio between the amount of the eluted resin and the weight of the resin calculated in advance.

### (6) Electrical conductivity

The obtained resin composition was applied to a release-treated polyethylene terephthalate (PET) film to a dried thickness of 20 µm, dried, and separated from the PET film. A sheet was thus prepared.

The electrode resistance value of the obtained sheet was measured using an electrode resistance meter (produced by Hioki E.E. Corporation) and evaluated based on the following criteria.
∘ (Good): An electrode resistance value of less than 500 Ω/sq
Δ (Fair): An electrode resistance value of 500 Ω/sq or greater and less than 1,000 Ω/sq
× (Poor): An electrode resistance value of 1,000 Ω/sq or greater

A low surface resistance value indicates excellent electron conductivity.

### (7) Evaluation of battery performance (capacity retention) (Preparation of coin cell)

The compositions for a secondary battery electrode obtained in the examples and the comparative examples were each applied to aluminum foil (thickness 20 um) and dried to give a positive electrode sheet having a dried thickness of 80 um. A piece (ϕ 11 mm) was punched out from this positive electrode sheet to give a positive electrode layer. Separately, a piece (ϕ 11 mm) was punched out from metal lithium foil having a thickness of 100 µm to give a negative electrode layer. A solvent mixture (EC:DEC:EMC = 3:4:3) containing 1 mol/L of LiPF₆ was used as an electrolyte solution. A positive electrode collector, the positive electrode layer, a porous PP membrane separator (thickness 25 um), the negative electrode layer, and a negative electrode current collector were sequentially stacked. They were pressed using a crimper to prepare a sealed coin cell.

### (Charge/discharge cycle evaluation)

The obtained coin cell was subjected to a charge/discharge cycle evaluation using a charge/discharge test device (produced by Hokuto Denko Corp.) in a voltage range from 3.0 to 4.2 V at a temperature of 25°C. The percentage of the capacity at the 100th cycle relative to the discharge capacity at the first cycle was calculated as the capacity retention (%). The evaluation was performed from the obtained capacity retention in accordance with the following criteria.
∘ (Good): 90% or greater
Δ (Fair): 80% or greater and less than 90%
× (Poor): less than 80%

**[Table 2]**

| | Resin composition for secondary battery electrode | | | | Evaluation | | | | | | | | | |
|---|---|---|---|---|---|---|---|---|---|---|---|---|---|---|
| | Active material (parts by weight) | Resin | | | Vicat softening temperature (°C) | Adhesion | Dispersibility | Coating film density | | Resistance against electrolyte solution | Electrical conductivity | | Capacity retention | |
| | | Resin type | Addition amount (parts by weight) | Addition amount relative to 100 parts by weight of active material (parts by weight) | | Peeling force (N) | Surface roughness (µm) | Change rate (%) | Rating | Elution rate (%) | Resistance value (Ω/sq) | Rating | Capacity retention (%) | Rating |
| Example 1 | 50 | A1 | 2.5 | 5 | 79 | 4.3 | 4.2 | 1.4 | ○ | 1.4 | 388 | ○ | 91 | ○ |
| Example 2 | 50 | A2 | 2.5 | 5 | 77 | 5.2 | 3.2 | 0.5 | ○ | 0.6 | 465 | ○ | 94 | ○ |
| Example 3 | 50 | A3 | 2.5 | 5 | 82 | 8.9 | 6.4 | 2.2 | ○ | 0.9 | 436 | ○ | 95 | ○ |
| Example 4 | 50 | A4 | 2.5 | 5 | 76 | 11.1 | 8.5 | 1.4 | ○ | 1.1 | 333 | ○ | 96 | ○ |
| Example 5 | 50 | A5 | 5 | 10 | 71 | 12.3 | 9.1 | 1.7 | ○ | 0.7 | 315 | ○ | 97 | ○ |
| Example 6 | 50 | A6 | 1 | 2 | 70 | 14.2 | 5.5 | 2 | ○ | 1.4 | 391 | ○ | 97 | ○ |
| Example 7 | 50 | A7 | 2.5 | 5 | 71 | 15.8 | 11.2 | 0.1 | ○ | 0.6 | 460 | ○ | 96 | ○ |
| Example 8 | 50 | A8 | 2.5 | 5 | 73 | 19.2 | 9.8 | 0.4 | ○ | 1.4 | 352 | ○ | 96 | ○ |
| Example 9 | 50 | A9 | 2.5 | 5 | 69 | 13.1 | 8.7 | 1.6 | ○ | 1.2 | 346 | ○ | 97 | ○ |
| Example 10 | 50 | A10 | 2.5 | 5 | 74 | 17.6 | 7.6 | 2.7 | ○ | 0.7 | 446 | ○ | 94 | ○ |
| Example 11 | 60 | A11 | 2.5 | 5 | 73 | 14.2 | 6.4 | 2.4 | ○ | 1.4 | 487 | ○ | 95 | ○ |
| Example 12 | 50 | A12 | 2.5 | 5 | 77 | 7.9 | 7.4 | 1.8 | ○ | 1.4 | 497 | ○ | 95 | ○ |
| Example 13 | 50 | A13 | 2.5 | 5 | 70 | 3.2 | 6.4 | 1.4 | ○ | 0.6 | 574 | Δ | 88 | Δ |
| Example 14 | 50 | A14 | 2.5 | 5 | 71 | 21.1 | 7.6 | 1.5 | ○ | 1.1 | 992 | Δ | 85 | Δ |
| Example 15 | 50 | A15 | 2.5 | 5 | 64 | 16.3 | 8.7 | 1.3 | ○ | 0.7 | 707 | Δ | 83 | Δ |
| Example 16 | 50 | A16 | 2.5 | 5 | 79 | 17.1 | 6.9 | 0.6 | ○ | 1.3 | 853 | Δ | 81 | Δ |
| Example 17 | 50 | A17 | 2.5 | 5 | 92 | 9.8 | 6.5 | 2.9 | ○ | 1.5 | 927 | Δ | 83 | Δ |
| Example 18 | 50 | A18 | 2.5 | 5 | 121 | 14.7 | 9.3 | 2.1 | ○ | 0.9 | 983 | Δ | 82 | Δ |
| Comparative Example 1 | 50 | B1 | 2.5 | 5 | 87 | 6.2 | 3.4 | 4.6 | × | 1.4 | 1216 | × | 81 | Δ |
| Comparative Example 2 | 50 | B2 | 2.5 | 5 | 42 | 13.2 | 6.9 | 3.8 | × | 2.6 | 1020 | × | 74 | × |
| Comparative Example 3 | 50 | B3 | 2.5 | 5 | 152 | 3.7 | 9.8 | 6.2 | × | 4.5 | 1156 | × | 71 | × |
| Comparative Example 4 | 50 | PVDF | 2.5 | 5 | 170 | 4.5 | 10.1 | 6.7 | × | 4.9 | 1273 | × | 88 | Δ |
| Comparative Example 5 | 50 | PVC | 2.5 | 5 | 108 | 2.9 | 12.7 | 6.4 | × | 3.9 | 1207 | × | 76 | × |

### INDUSTRIAL APPLICABILITY

The present invention can provide a resin composition for a secondary battery electrode that is excellent in the dispersibility of active materials, resistance against electrolyte solutions, and coating film density and capable of achieving both high conductivity and adhesion.

## Claims

1. A resin composition for a secondary battery electrode, the resin composition comprising:
an active material;
a non-aqueous solvent; and
a polyvinyl acetal resin,
the polyvinyl acetal resin including a structural unit containing a halogen atom, and having a Vicat softening temperature of 50°C or higher and 150°C or lower.

2. The resin composition for a secondary battery electrode according to claim 1,
wherein the halogen atom is at least one selected from the group consisting of a fluorine atom, a chlorine atom, and a bromine atom.

3. The resin composition for a secondary battery electrode according to claim 1 or 2,
wherein the structural unit containing a halogen atom is a structure having a halogen atom bonded via an acetal bond.

4. The resin composition for a secondary battery electrode according to any one of claims 1 to 3,
wherein the structural unit containing a halogen atom is contained in an amount of 0.01 mol% or greater and 20 mol% or less relative to all structural units of the polyvinyl acetal resin.

5. The resin composition for a secondary battery electrode according to any one of claims 1 to 4,
wherein an average degree of polymerization of the polyvinyl acetal resin is 100 or greater and 6,000 or less.

6. The resin composition for a secondary battery electrode according to any one of claims 1 to 5,
wherein a hydroxy group content of the polyvinyl acetal resin is 20 mol% or greater and 90 mol% or less.
